# EUROPEAN PATENT APPLICATION

(11) **EP 3 109 139 A1**
(43) Date of publication of application: **28.12.2016**
(21) Application number: 16174624.3
(22) Date of filing: 15.06.2016
(51) Int. Cl.: B62J 1/18

(54) **BICYCLE SADDLE FOR ENDURO AND DOWNHILL CYCLING**

(30) Priority: 22.06.2015 IT UB20155148 U
(71) Applicant: G.R. Bike S.r.l., 35127 Padova Frazione Camin (IT)
(72) Inventor: RIZZATO, Gildo, 35031 Abano Terme (PD) (IT); RIZZATO, Andrea, 35031 Abano Terme (PD) (IT)
(74) Representative: Modiano, Micaela Nadia

(57) **Abstract**

A bicycle saddle (10) for enduro and downhill cycling, which comprises a supporting frame (11), a shell (12) and a cushion (13), the shell (12) comprising a front part (15), with a mainly longitudinal extension, and a widened rear part (16), an elastically deformable bumper shoulder (19) protruding in a cantilever fashion in the anteroposterior direction at the rear edge (17) of the rear part (16) of the shell (12), and being designed to define an auxiliary support crest for a rear end portion (20) of the cushion (13).

## Description

The present invention relates to a bicycle saddle for enduro and downhill cycling.

Nowadays, in sporting activities that involve the use of a mountain bike, the events known as 'downhill' and 'enduro' are increasingly widespread.

As an event, downhill cycling is considered the most spectacular and exciting, since the competitions are held on courses that are almost exclusively downhill, made up of jumps, banked curves, technical portions over rocks and roots, and other, similar obstacles.

Bicycles for downhill riding are made to maximize the absorption of uneven terrain, optimize smooth operation and ensure good handling and stability at high speeds.

Since downhill is a sport where speed is the principal factor to consider, a bike composed of light parts is essential.

'Enduro' entails more general off-road activity, and also includes uphill courses in order to gain on the descent, and in general these tracks are less exciting although just as demanding.

A bicycle saddle for mountain bikes, and particularly for the enduro and downhill events, is usually made up of four parts: the supporting frame, the shell, the padding and the covering, of which the supporting frame and the shell have a structural function.

The supporting frame is usually constituted by a metallic bar which is folded so as to define three points for fixing to the shell, a front point and two rear points.

The shell is usually defined by a flat rigid body, made of plastic material or of carbon fibers, or of other materials that are similar and equivalent, which is contoured with a front part with a mainly longitudinal extension, and a widened rear part for resting the buttocks of a user.

A rider in these events frequently assumes a posture known in the jargon as 'out of the saddle', in which the rider crouches and takes up a position outside the space occupation of the saddle and behind it with respect to an advancement direction.

Such posture, which is essential for executing some technical moves with the bicycle, exposes the rider to the risk of hitting the rear part of the saddle, which, owing to the rigidity of its shell, can cause lesions of varying severity in the rider.

The aim of the present invention is to provide a bicycle saddle for enduro and downhill cycling, which is capable of overcoming the above mentioned drawbacks of conventional saddles.

Within this aim, an object of the invention is to provide a bicycle saddle that is safer for a user in the out-of-the-saddle posture.

Another object of the invention is to provide a bicycle saddle with overall performance and comfort at least as good as in conventional saddles.

This aim and these and other objects which will become better apparent hereinafter are achieved by a bicycle saddle for enduro and downhill cycling, which comprises a supporting frame, a shell and a cushion, said shell comprising a front part, with a mainly longitudinal extension, and a widened rear part, said bicycle saddle being characterized in that an elastically deformable bumper shoulder protrudes in a cantilever fashion in the anteroposterior direction at the rear edge of the rear part of said shell, and is designed to define an auxiliary support crest for a rear end portion of said cushion.

Further characteristics and advantages of the invention will become better apparent from the description of two preferred, but not exclusive, embodiments of the bicycle saddle according to the invention, which are illustrated for the purposes of non-limiting example in the accompanying drawings wherein:

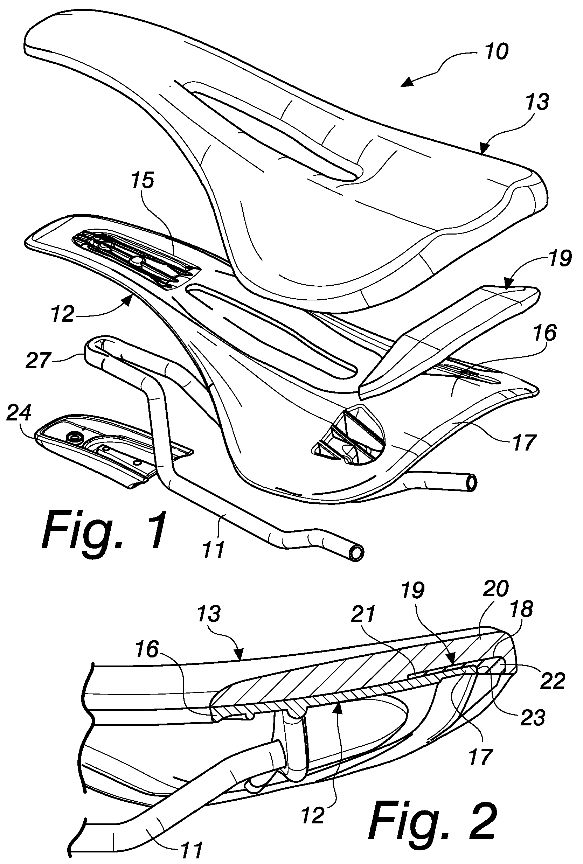

- Figure 1 is an exploded perspective view of a bicycle saddle according to the invention in a first embodiment thereof;
- Figure 2 is a longitudinal cross-sectional view of a portion of a bicycle saddle according to the invention in the first embodiment thereof;

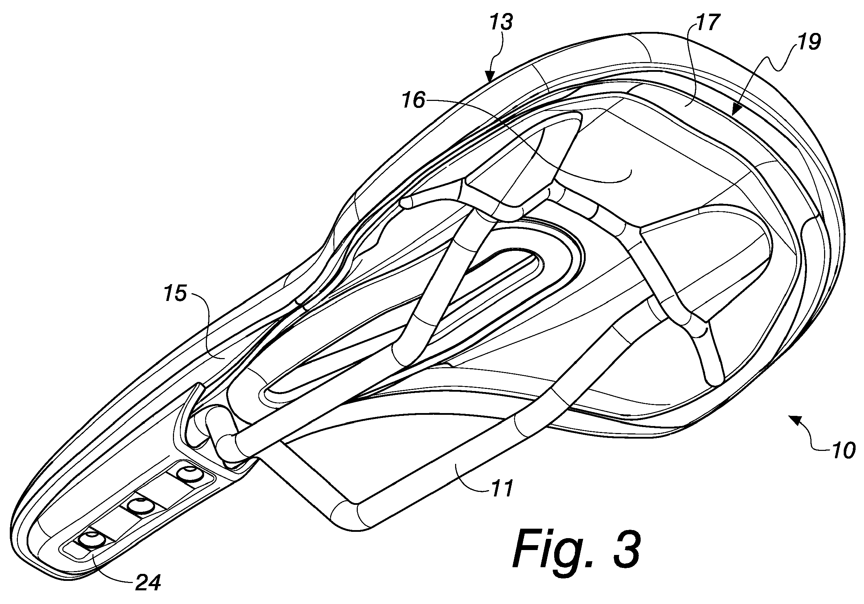

- Figure 3 is a perspective view from below of a bicycle saddle according to the invention in the first embodiment thereof;
- Figure 4 is an exploded perspective view of a bicycle saddle according to the invention in a second embodiment thereof;
- Figure 5 is a longitudinal cross-sectional view of a portion of a bicycle saddle according to the invention in the second embodiment thereof.

With reference to the figures, a bicycle saddle for enduro and downhill cycling according to the invention is generally designated with the reference numeral 10.

Such bicycle saddle 10 comprises a supporting frame 11, a shell 12 and a cushion 13.

The cushion 13 should be understood to comprise a covering and a padding, or to be constituted by only the padding, the outer layer of which being exposed as a covering.

The shell 12 comprises a front part 15, with a mainly longitudinal extension, and a widened rear part 16.

The peculiarity of the bicycle saddle 10 lies in the fact that an elastically deformable bumper shoulder 19 protrudes in a cantilever fashion in the anteroposterior direction at the rear edge 17 of the rear part 16 of the shell 12, and is designed to define an auxiliary support crest 18 for a rear end portion 20 of the cushion 13.

Such bumper shoulder 19 is constituted by a silicone gel element with an arc-like profile which comprises a flat portion 21 for resting on a perimetric surface portion of the rear edge 17 of the shell 12, and a cantilevered portion 22 which defines, with such flat portion 21, a step 23 for facilitating the positioning thereof with respect to the rear edge 17.

The cushion 13 is made, for example, of polyurethane with a microfiber coating.

The shell 12 is made, for example, of carbon fiber-reinforced nylon.

The bicycle saddle 10 is completed by a supporting body 24 which is contoured to accommodate the front end 27 of the supporting frame 11 and to be locked to the front part 15 of the shell 12, with screws or other conventional fixing means.

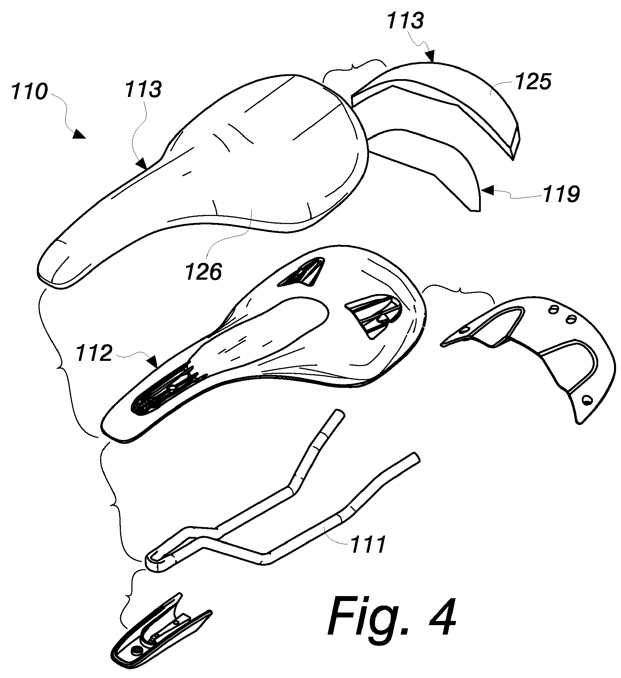

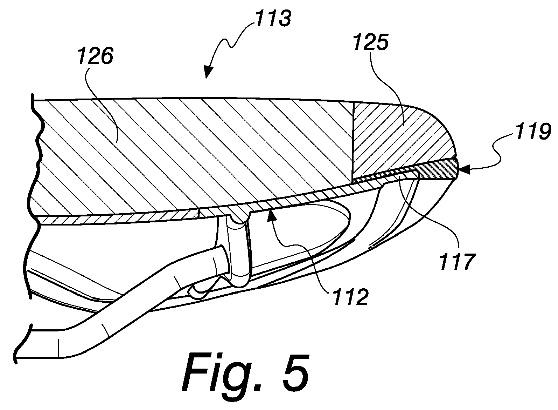

In a second embodiment of the invention, shown in Figures 4 and 5, the bicycle saddle 110 comprises, similarly to what is described above, a supporting frame 111, a shell 112 and a cushion 113.

In such second embodiment, the cushion 113 comprises a rear part with different density 125, softer than the remaining part 126 of the cushion 113.

Such rear part with different density 125 is contoured to affect and cover the bumper shoulder 119.

Such rear part with different density 125 is made of synthetic rubber.

Such rear part 125 further improves the impact-absorption performance of the bumper shoulder 119.

Usually, the bicycle saddle 10 and 110 according to the invention, thanks to the bumper shoulder 119, which is elastically deformable and protrudes in a cantilever fashion rearward with respect to the shell 12 and 112, ensures that in the event of an impact the user does not encounter the rigid rear edge 17 or 117 of the shell 12 or 112, but instead the bumper shoulder 19 and 119 and the overlying part of the cushion 13 and 125, with consequent minor risk of lesions and accidents for the user in the 'out-of-the-saddle' posture, to the advantage of the health of such user and of continuing to practice the sport.

In practice it has been found that the invention fully achieves the intended aim and objects.

In particular, with the invention a bicycle saddle has been devised that is safer for a user in the out-of the-saddle posture.

Moreover, with the invention a bicycle saddle has been devised with overall performance and comfort at least as good as in conventional saddles.

The invention, thus conceived, is susceptible of numerous modifications and variations, all of which are within the scope of the appended claims. Moreover, all the details may be substituted by other, technically equivalent elements.

In practice the components and the materials employed, provided they are compatible with the specific use, and the contingent dimensions and shapes, may be any according to requirements and to the state of the art.

The disclosures in Italian Utility Model Application No. 202015000025975 (UB2015U045148) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bicycle saddle (10) for enduro and downhill cycling, which comprises a supporting frame (11), a shell (12) and a cushion (13;113), said shell (12) comprising a front part (15), with a mainly longitudinal extension, and a widened rear part (16), **characterized in that** an elastically deformable bumper shoulder (19) protrudes in a cantilever fashion in the anteroposterior direction at the rear edge (17) of the rear part (16) of said shell (12), and is designed to define an auxiliary support crest for a rear end portion (20) of said cushion (13).

2. The bicycle saddle according to claim 1, **characterized in that** said bumper shoulder (19) is constituted by a silicone gel element with an arc-like profile which comprises a flat portion (21) for resting on a perimetric surface portion of the rear edge (17) of the shell (12), and a cantilevered portion (22) which defines, with said flat portion (21), a step (23) for facilitating the positioning thereof with respect to said rear edge (17).

3. The bicycle saddle according to one or more of the preceding claims, **characterized in that** said cushion (13) is made of polyurethane with a microfiber covering.

4. The bicycle saddle according to one or more of the preceding claims, **characterized in that** said shell (12) is made of carbon fiber-reinforced nylon.

5. The bicycle saddle according to one or more of the preceding claims, **characterized in that** said cushion (113) comprises a rear part with different density (125), softer than a remaining part (126) of said cushion (113).

6. The bicycle saddle according to one or more of the preceding claims, **characterized in that** said rear part with different density (125) is contoured to affect and cover said bumper shoulder (119).

7. The bicycle saddle according to one or more of the preceding claims, **characterized in that** said rear part with different density (125) is made of synthetic rubber.
